(19) **Europäisches Patentamt / European Patent Office / Office européen des brevets**

(11) **EP 4 506 389 A1**

(12) **EUROPEAN PATENT APPLICATION**
published in accordance with Art. 153(4) EPC

(43) Date of publication:
**12.02.2025 Bulletin 2025/07**

(21) Application number: **23784748.8**

(22) Date of filing: **04.04.2023**

(51) International Patent Classification (IPC):
**C08G 18/58** (2006.01)    **C08G 18/80** (2006.01)
**C09J 175/00** (2006.01)

(52) Cooperative Patent Classification (CPC):
**C08G 18/58; C08G 18/80; C09J 175/00**

(86) International application number:
**PCT/JP2023/013920**

(87) International publication number:
**WO 2023/195462 (12.10.2023 Gazette 2023/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **08.04.2022 JP 2022064520**

(71) Applicant: **ADEKA CORPORATION**
**Arakawa-ku**
**Tokyo**
**116-8554 (JP)**

(72) Inventor: **INADOME, Masato**
**Tokyo 116-8554 (JP)**

(74) Representative: **Forstmeyer, Dietmar**
**Boeters & Lieck**
**Oberanger 32**
**80331 München (DE)**

(54) **CURABLE RESIN COMPOSITION**

(57)    A curing resin composition useful as an adhesive excellent in impact resistance, heat resistance, and water resistance is provided. The composition contains (A) an epoxy resin, (B) a blocked urethane, and (C) an amine latent curing agent. The blocked urethane (B) has a weight average molecular weight Mw of 15,000 to 38,000 and a ratio of weight average molecular weight Mw to number average molecular weight Mn, Mw/Mn, of 1.9 to 3.0. The epoxy resin (A) is preferably a bisphenol epoxy resin. The blocked urethane (B) preferably contains a blocked urethane having an oxybutylene group and a blocked urethane having an oxypropylene group.

EP 4 506 389 A1

## Description

Technical Field

The present invention relates to a curing resin composition, more particularly a curing resin composition containing an epoxy resin, a blocked urethane having a specific molecular weight distribution, and an amine latent curing agent.

Background Art

The applied industries of structural bonding technology are diverse, including the transportation equipment (automobiles, railroad cars, aircraft, etc.), the energy (power plants, etc.), and the infrastructure (bridges, buildings, etc.). In these fields, epoxy resins are widely used because of their high physical properties and durability as well as their low cost. To further improve impact resistance and adhesion, epoxy resins are sometimes used in combination with blocked urethane, in which the terminal of an isocyanate-terminated urethane prepolymer is blocked with a blocking agent. A composition containing an epoxy resin and a blocked urethane combines the physical properties and durability provided by the epoxy resin and the impact resistance and adhesion provided by the blocked urethane and can be used as a high-performance adhesive as described, e.g., in patent literature 1 and 2.

When a composition containing an epoxy resin combined with a blocked urethane is cured using, for example, a curing agent, the epoxy resin increases in molecular weight through addition reaction of the curing agent and self-polymerization by an amine. On the other hand, the curing reaction with respect to the blocked urethane is exemplified by the reaction in which the blocking agent of the blocked urethane dissociates to generate an isocyanate group, and the isocyanate group reacts with the hydroxy group generated by ring opening of the epoxy group at the time of the curing reaction of the epoxy resin.

Epoxy resin polymers obtained by the polymerization of widely used bisphenol epoxy resins are rigid cured products due to the stiffness of the aromatic ring structure, while those formed by the polymerization mainly of a blocked urethane with a polyalkylene polyether structure provide flexible cured products. A curing system containing both an epoxy resin and a blocked urethane involves the above curing mechanisms in an intricately intertwined fashion. Therefore, in order to obtain an adhesive with a comprehensive balance of performance, including durability, impact resistance, adhesion, and other properties, various factors, such as the structure, mixing ratio, and molecular weight of each component must be considered.

Citation List

Patent Literature:

Patent literature 1: JP 05-155973A
Patent literature 2: US 2021/0380749 A1

Summary of Invention

Technical Problem:

Automobile manufacturing involves processes in which a workpiece substrate is exposed to high temperature, such as a paint baking process. Although the resin compositions described in patent literature 1 and 2 exhibit physical properties and adhesion to a certain extent, they have the problem of low heat resistance in the above processes, so that the adhesive can significantly deteriorate in various properties when exposed to high temperatures. In addition, improvements in the impact resistance and water resistance are required of adhesives to improve the safety of automobiles.

Accordingly, an object of the present invention is to provide a curing resin composition that can be used as an adhesive excellent in impact resistance, heat resistance, and water resistance.

Solution to Problem:

In order to solve the above problem, the inventors have conducted an extensive study on the composition of blocked urethane. As a result, they have found that, in a curing system combining an epoxy resin and a blocked urethane, a curing resin composition excellent in impact resistance, heat resistance, and water resistance can be obtained by using a blocked urethane having a specific molecular weight and a specific molecular weight distribution.

The present invention provides a curing resin composition comprising (A) an epoxy resin, (B) a blocked urethane, and (C) an amine latent curing agent, wherein

the blocked urethane (B) has Mw of 15,000 to 38,000, and Mw/Mn of 1.9 to 3.0
wherein Mw represents a weight average molecular weight of the blocked urethane (B), and Mn represents a number average molecular weight of the blocked urethane (B)

Advantageous Effects of Invention:

The curing resin composition of the present invention provides adhesives having excellent impact resistance, heat resistance, and water resistance, particularly adhesives suitable for bonding structural materials in automobiles, railroad cars, aircraft, and so forth where high adhesion and durability are required.

Description of Embodiments

The curing resin composition of the present invention contains (A) an epoxy resin, (B) a blocked urethane, and (C) an amine latent curing agent.

Examples of the epoxy resin (A) include polyglycidyl ethers of mononuclear polyhydric phenol compounds, such as hydroquinone, resorcin, pyrocatechol, and phloroglucinol; polyglycidyl ethers of polynuclear polyhydric phenol compounds, such as dihydroxynaphthalene, biphenol, methylenebisphenol (i.e., bisphenol F), methylenebis(ortho-cresol), ethylidenebisphenol, isopropylidenebisphenol (i.e., bisphenol A), isopropylidenebis(ortho-cresol), tetrabromobisphenol A, 1,3-bis(4-hydroxycumylbenzene), 1,4-bis(4-hydroxycumylbenzene), 1,1,3-tris(4-hydroxyphenyl)butane, 1,1,2,2-tetra(4-hydroxyphenyl)ethane, thiobisphenol, sulfonylbisphenol, oxybisphenol, phenol novolak, ortho-cresol novolak, ethylphenol novolak, butylphenol novolak, octylphenol novolak, resorcin novolak, and terpene phenol; polyglycidyl ethers of polyhydric alcohols, such as ethylene glycol, propylene glycol, butylene glycol, hexanediol, polyethylene glycol, polypropylene glycol, thiodiglycol, dicyclopentadiene dimethanol, 2,2-bis(4-hydroxycyclohexyl)propane (i.e., hydrogenated bisphenol A), glycerol, trimethylolpropane, pentaerythritol, and sorbitol; glycidyl esters of aliphatic, aromatic or alicyclic polybasic acids, such as maleic acid, fumaric acid, itaconic acid, succinic acid, glutaric acid, suberic acid, adipic acid, azelaic acid, sebacic acid, dimer acid, trimer acid, phthalic acid, isophthalic acid, terephthalic acid, trimellitic acid, trimesic acid, pyromellitic acid, tetrahydrophthalic acid, hexahydrophthalic acid, and endomethylenetetrahydrophthalic acid; homo- or copolymers of glycidyl methacrylate; epoxy compounds having a glycidylamino group, such as N,N-diglycidylaniline, bis(4-(N-methyl-N-glycidylamino)phenyl)methane, diglycidyl o-toluidine, N,N-bis(2,3-epoxypropyl)-4-(2,3-epoxypropoxy)-2-methylaniline, N,N-bis(2,3-epoxypropyl)-4-(2,3-epoxypropoxy)aniline, and N,N,N',N'-tetra(2,3-epoxypropyl)-4,4'-diaminodiphenylmethane; epoxidized cyclic olefin compounds, such as vinylcyclohexene diepoxide, dicyclopentadiene diepoxide, 3,4-epoxycyclohexylmethyl-3,4-epoxycyclohexanecarboxylate, 3,4-epoxy-6-methylcyclohexylmethyl-6-methylcyclohexanecarboxylate, and bis(3,4-epoxy-6-methylcyclohexylmethyl) adipate; epoxidized conjugated diene polymers, such as epoxidized polybutadiene and epoxidized styrene-butadiene copolymers; and heterocyclic compounds, such as triglycidyl isocyanurate. These epoxy resins may be used either individually or in combination of two or more thereof.

Epoxy resins with an added urethane structure, namely urethane-modified epoxy resins are also useful as the epoxy resin (A). The urethane-modified epoxy resins have an epoxy group and a urethane bond in their molecule and can be obtained by, for example, causing an isocyanate-containing compound to react with a hydroxy-containing epoxy compound. Such a urethane-modified epoxy resin can be prepared by known methods, as taught in JP 2016-210922A.

As the epoxy resin (A), rubber-modified epoxy resins obtained by the reaction of an epoxy resin with carboxy-terminated butadiene-acrylonitrile rubber (CTBN) and/or amine-terminated butadiene-acrylonitrile rubber (ATBN) are also useful.

Chelate-type epoxy resins are also useful as the epoxy resin (A). The chelate-type epoxy resins include epoxy resins containing a coordinating compound that coordinates to a metal atom (metal ion), such as iron or copper, and chelate-modified epoxy resins that are modified with such a coordinating compound. Examples of the coordinating compound include those having a site that is coordinatable to a metal atom (metal ion), the site containing amino, carbonyl, amide (amide bond), hydroxy, mercapto, P=O bond, or S=O bond, and so on.

The chelate-modified epoxy resins are commercially available from ADECA Corp. under the product name Adeka Resin EP series EP-49-10N, EP-49-10P, and EP-49-10P2.

Among the epoxy resins described above, bisphenol epoxy resins are preferred in terms of availability and higher effects of the present invention. With a view to further improvement of various performance properties, including adhesion, a combined use of a bisphenol epoxy resin with a rubber-modified epoxy resin and/or a chelate-modified epoxy resin is also preferred. In the combined use, each of the rubber-modified epoxy resin and/or the chelate-modified epoxy resin is preferably used independently in an amount of 1 to 25 mass%, more preferably 3 to 15 mass%, relative to the sum of the epoxy resin (A) and the blocked urethane (B).

The blocked urethane (B) is a urethane resin having a urethane structure in the molecule and with the terminal isocyanate groups blocked with a blocking agent. The blocked urethane (B) has a weight average molecular weight Mw of 15,000 to 38,000 and a ratio of weight average molecular weight Mw to number average molecular weight Mn, Mw/Mn, of 1.9 to 3.0. The Mw and Mn values are determined by gel permeation chromatography (GPC) under the following conditions.

GPC Instrument: GL7700, from GL Science Inc.
Columns: KF-803 (8.0 mm I.D. $\times$ 30 cm) plus KF-804 (8.0 mm I.D. $\times$ 30 cm), from Showa Denko K.K.
Detector: Differential refractometer RI7754A, from GL Science Inc.
Column temperature: 40°C
Eluent: THF
Flow rate: 1.0 mL/min
Injection volume: 10 $\mu$L (1 mass% solution in THF)
Standard polymers: A calibration curve is prepared using the following set of polystyrene standards available from Tosoh Corp.
TSK Standard Polystyrene A-500
TSK Standard Polystyrene A-1000
TSK Standard Polystyrene A-2500
TSK Standard Polystyrene A-5000
TSK Standard Polystyrene F-1
TSK Standard Polystyrene F-2
TSK Standard Polystyrene F-4
TSK Standard Polystyrene F-10
TSK Standard Polystyrene F-20
TSK Standard Polystyrene F-40

In order to obtain higher effects of the present invention, it is preferred that the Mw be in the range of from 20,000 to 35,000 and that the Mw/Mn be in the range of from 1.9 to 2.5, and it is more preferred that the Mw be in the range of from 20,000 to 25,000 and that the Mw/Mn be in the range of from 1.9 to 2.1.

The blocked urethane (B) that can be used in the invention is an isocyanate-terminated urethane prepolymer whose terminals are blocked with a blocking agent. The blocked urethane (B) can be prepared by, for example, reacting (B-1) a polyisocyanate and (B-2) a polyol to form an isocyanate-terminated urethane prepolymer and reacting (B-3) a blocking agent on the resulting urethane prepolymer.

Examples of the polyisocyanate (B-1) include any compounds having at least two isocyanate groups in the molecule, including aromatic diisocyanates, such as phenylene diisocyanate, tolylene diisocyanate, diphenylmethane diisocyanate, naphthalene diisocyanate, xylylene diisocyanate, and tetramethylxylylene diisocyanate; and aliphatic or alicyclic diisocyanates, such as hexamethylene diisocyanate, lysine diisocyanate, cyclohexane diisocyanate, isophorone diisocyanate, and 4,4'-dicyclohexylmethane diisocyanate. These polyisocyanates can be used either individually or in combination of two or more thereof. Among them, aliphatic or alicyclic structure-containing diisocyanates are preferred in terms of high weatherability, low cost, and availability, with hexamethylene diisocyanate and isophorone diisocyanate being more preferred.

Examples of the polyol (B-2) include any compounds having at least two hydroxy groups in the molecule, including polyether polyols, polyester polyols, and polycarbonate polyols.

Examples of the polyether polyols include those obtained by addition polymerization of an alkylene oxide to an initiator and those obtained by ring-opening polymerization of a cyclic ether compound.

Examples of the initiator include water, ethylene glycol, diethylene glycol, triethylene glycol, tetraethylene glycol, 1,2-propanediol, 1,3-propanediol, dipropylene glycol, tripropylene glycol, 1,2-butanediol, 1,3-butanediol, 1,4-butanediol, 2,3-butanediol, 1,5-pentanediol, 1,5-hexanediol, 1,6-hexanediol, 2,5-hexanediol, 1,7-heptanediol, 1,8-octanediol, 1,9-nonanediol, 1,10-decanediol, 1,11-undecanediol, 1,12-dodecanediol, 2-methyl-1,3-propanediol, neopentyl glycol, 2-butyl-2-ethyl-1,3-propanediol, 3-methyl-1,5-pentanediol, 2-ethyl-1,3-hexanediol, 2-methyl-1,8-octanediol, trimethylolpropane, trimethylolethane, glycerol, ethylenediamine, 1,2-diaminopropane, 1,3-diaminopropane, 1,2-diaminobutane, 1,3-diaminobutane, 1,4-diaminobutane, phosphoric acid, and acidic phosphate ester.

Examples of the alkylene oxide include ethylene oxide, propylene oxide, butylene oxide, styrene oxide, and epichlorohydrin.

Examples of the cyclic ether compound include tetrahydrofuran, ethylene oxide, propylene oxide, oxetane, tetrahydropyran, oxepane, and 1,4-dioxane.

Examples of the polyester polyol include compounds obtained by esterification reaction between a low-molecular compound having at least two hydroxy groups and a polybasic acid, compounds obtained by ring-opening polymerization of cyclic ester compounds, such as ε-caprolactone and γ-valerolactone, and copolyesters thereof.

Examples of the low-molecular compound having at least two hydroxy groups include aliphatic diols, such as ethylene glycol, diethylene glycol, triethylene glycol, tetraethylene glycol, 1,2-propanediol, 1,3-propanediol, dipropylene glycol, tripropylene glycol, 1,2-butanediol, 1,3-butanediol, 1,4-butanediol, 2,3-butanediol, 1,5-petanediol, 1,5-hexanediol, 1,6-hexanediol, 2,5-hexanediol, 1,7-heptanediol, 1,8-octanediol, 1,9-nonanediol, 1,10-decanediol, 1,11-undecanediol, 1,12-dodecanediol, 2-methyl-1,3-propanediol, neopentyl glycol, 2-butyl-2-ethyl-1,3-propanediol, 3-methyl-1,5-pentanediol, 2-ethyl-1,3-hexanediol, and 2-methyl-1,8-octanediol; alicyclic diols, such as 1,4-cyclohexanedimethanol and hydrogenated bisphenol A; bisphenol-based diols, such as bisphenol A, bisphenol A alkylene oxide adducts, bisphenol S, and bisphenol S alkylene oxide adducts; and compounds having three hydroxy groups, such as trimethylolpropane, trimethylolethane, and glycerol.

Examples of the polybasic acid include aliphatic dicarboxylic acids, such as succinic acid, adipic acid, suberic acid, azelaic acid, sebacic acid, dodecanedicarboxylic acid, and dimeric acid; alicyclic dicarboxylic acids, such as 1,4-cyclohexanedicarboxylic acid; aromatic dicarboxylic acids, such as orthophthalic acid, isophthalic acid, terephthalic acid, 1,4-naphthalenedicarboxylic acid, 2,3-naphthalenedicarboxylic acid, 2,6-naphthalenedicarboxylic acid, and biphenyldicarboxylic acid; and anhydrides and ester derivatives of the above polycarboxylic acids.

Examples of the polycarbonate polyols include those obtained by the reaction between a carbonic ester and/or phosgene and a low-molecular compound having at least two hydroxy groups.

Examples of the carbonic ester include dimethyl carbonate, diethyl carbonate, methyl ethyl carbonate, ethylene carbonate, propylene carbonate, butylene carbonate, diphenyl carbonate, dinaphthyl carbonate, and phenyl naphthyl carbonate.

Examples of the low-molecular compound having at least two hydroxy groups, which is used to produce the polycarbonate polyol, include those recited above for use in the preparation of the polyester polyols.

In addition to the above, low-molecular compounds having at least two hydroxy groups are also useful as the polyol (B-2). Examples of such compounds include ethylene glycol, diethylene glycol, triethylene glycol, tetraethylene glycol, 1,2-propanediol, 1,3-propanediol, dipropylene glycol, tripropylene glycol, 1,2-butanediol, 1,3-butanediol, 1,4-butanediol, 2,3-butanediol, 1,5-pentanediol, 1,5-hexanediol, 1,6-hexanediol, trimethylolpropane, trimethylolethane, and glycerol.

These polyols can be used either individually or in combination of two or more thereof. Among the polyols (B-2) recited above, polyether polyols are preferred in terms of higher effects of the present invention, with polyether polyols with an oxypropylene group and polyols with an oxybutylene group being more preferred.

Examples of the blocking agent (B-3) include active methylene compounds, such as malonic diesters (e.g., diethyl malonate), acetylacetone, and acetoacetic esters (e.g., ethyl acetoacetate); oxime compounds, such as acetoxime, methy ethyl ketoxime (MEKO), and methyl isobutyl ketoxime (MIBKO); monohydric alcohols, such as methyl alcohol, ethyl alcohol, propyl alcohol, butyl alcohol, heptyl alcohol, hexyl alcohol, octyl alcohol, 2-ethylhexyl alcohol, isononyl alcohol, and stearyl alcohol, and their isomers; glycol derivatives, such as methyl glycol, ethyl glycol, ethyl diglycol, ethyl triglycol, butyl glycol, and butyl diglycol; amine compounds, such as dicyclohexylamine; monophenols, such as phenol, cresol, ethylphenol, n-propylphenol, isopropylphenol, butylphenol, p-t-butylphenol, octylphenol, nonylphenol, dodecylphenol, cyclohexylphenol, chlorophenol, bromophenol, cardanol, 2-allylphenol, p-methoxyphenol, o-methoxyphenol, 2,4-dimethoxyphenol, 2,6-dimethoxyphenol, isoeugenol, 4-(dimethylamino)phenol, and p-cumylphenol; diphenols, such as resorcin, catechol, hydroquinone, bisphenol A, diallyl bisphenol A, bisphenol S, bisphenol F, naphthol, p-t-butylcatechol, and 2,4-dihydroxybenzophenone; and ε-caprolactam. In order to obtain more reliably a curing resin composition having strong adhesion, it is particularly preferred to use at least one compound selected from the group consisting of dicyclohexylamine, diphenols, monophenols, and ε-caprolactam. Monophenols are more preferred, and t-butylphenol, nonylphenol, dodecylphenol, p-cumylphenol, cardanol, 2-allylphenol, and p-methoxyphenol are even more preferred.

In the preparation of the blocked urethane (B), the isocyanate-terminated urethane prepolymer can be obtained by increasing the equivalent amount of isocyanate groups in the polyisocyanate (B-1) in excess of the equivalent amount of hydroxyl groups in the polyol (B-2), and the blocking agent (B-3) can then be reacted. The polyisocyanate (B-1) and the polyol (B-2) are preferably reacted in a ratio such that that the isocyanate equivalent of the polyisocyanate (B-1) is 1.1 to 2.2 Eq, more preferably 1.3 to 2.1 Eq, per hydroxy equivalent of the polyol (B-2). The blocking agent (B-3) is preferably used in an amount of 0.8 to 1.2 Eq per isocyanate equivalent of the urethane prepolymer resulting from the reaction between (B-1) and (B-2).

The blocked urethane (B) that can be used in the present invention should have a specific molecular weight and a specific molecular weight distribution. Specifically, the blocked urethane (B) has a weight average molecular weight Mw of 15,000 to 38,000 and a ratio of weight average molecular weight Mw to number average molecular weight Mn, Mw/Mn, of 1.9 to 3.0. Methods for obtaining the blocked urethane with such a molecular weight and a molecular weight distribution include selecting the order of feeding the above-described reaction materials, adjusting the reaction temperature and time, and mixing separately prepared blocked urethanes having different molecular weights and/or molecular weight distributions. The method by mixing separately prepared blocked urethanes having different molecular weights and/or molecular weight distributions is preferred for ease of adjusting the Mw and Mw/Mn.

When mixing separately prepared blocked urethanes with different molecular weight distributions, two, three or even more blocked urethanes different in molecular weight distribution may be used, but it is preferred to use two blocked urethanes different in molecular weight distribution in terms of working efficiency.

When two blocked urethanes having different molecular weight distributions, designated blocked urethane 1 and blocked urethane 2, are used, blocked urethane 1 preferably has an Mw of 30,000 to 50,000, more preferably 35,000 to 45,000, and blocked urethane 2 preferably has an Mw of 5,000 to 25,000, more preferably 10,000 to 20,000. The Mw of each blocked urethane can be determined in the same manner as for the blocked urethane (B). By appropriately adjusting the Mw's of the two blocked urethanes to be mixed and their mixing ratios, the Mw and Mw/Mn ranges of the blocked urethane (B) can be adjusted.

When using the two blocked urethanes described above, it is preferred that blocked urethane 1 and blocked urethane 2 have an oxybutylene group and/or an oxypropylene group in their molecular structure. More preferably, blocked urethane 1 has an oxybutylene group, and blocked urethane 2 has an oxypropylene group, or blocked urethane 1 has an oxypropylene group and blocked urethane 2 has an oxybutylene group. Even more preferably, blocked urethane 1 has an oxybutylene group and blocked urethane 2 has an oxypropylene group.

The content of the blocked urethane (B) in the composition of the present invention is preferably 1 to 40 mass%, more preferably 5 to 30 mass%, relative to the sum of the epoxy resin (A) and the blocked urethane (B) in terms of higher effects of the present invention.

Examples of the amine latent curing agent (C) that can be used in the present invention include dicyandiamide, modified polyamines, hydrazides, 4,4'-diaminodiphenylsulfone, boron trifluoride-amine complex salts, ureas, and melamine. They may be used either individually or in combination of two or more thereof.

Unlike general curing agents that react at room temperature (e.g., 25°C), a latent curing agent reacts little or not at all at room temperature but starts to react when stimulated, for example, by heating.

Examples of the modified polyamines include epoxy-modified amines, amide-modified amines, acrylate-modified amines, isocyanate-modified amines, and Mannich-modified amines.

Examples of the amines used to provide the modified polyamines include aliphatic polyamines, such as ethylenediamine, diethylenetriamine, triethylenetetramine, tetraethylenepentamine, polyoxypropylenediamine, and polyoxypropylenetriamine; alicyclic polyamines, such as isophoronediamine, mensenediamine, bis(4-amino-3-methyldicyclohexyl)methane, diaminodicyclohexylmethane, bis(aminomethyl)cyclohexane, N-aminoethylpiperazine, and 3,9-bis(3-aminopropyl)-2,4,8,10-tetraoxaspiro(5.5)undecane; monocyclic polyamines, such as m-phenylenediamine, p-phenylenediamine, tolylene-2,4-diamine, tolylene-2,6-diamine, mesitylene-2,4-diamine, mesitylene-2,6-diamine, 3,5-diethyltolylene-2,4-diamine, and 3,5-diethyltolylene-2,6-diamine; aromatic polyamines, such as biphenylenediamine, 4,4-diaminodiphenylmethane, 2,5-naphtylenediamine, and 2,6-naphthylenediamine; and imidazoles, such as 2-methylimidazole, 2-ethyl-4-methylimidazole, 2-isopropylimidazole, 2-undecylimidazole, 2-heptadecylimidazole, 2-phenylimidazole, 2-phenyl-4-methylimidazole, and 2-aminopropylimidazole.

The epoxy-modified amines are prepared by reacting the amines described above in a usual manner with various epoxy resins, including phenyl glycidyl ether, butyl glycidyl ether, bisphenol A diglycidyl ether, bisphenol F diglycidyl ether, and carboxylic acid glycidyl esters.

The amide-modified amines are prepared by reacting the amines with a carboxylic acid, such as adipic acid, sebacic acid, phthalic acid, isophthalic acid, or dimeric acid, in a usual manner.

The acrylate-modified amines are obtained by reacting the amines with an acrylic ester, such as ethyl acrylate, n-butyl acrylate, or 2-ethylhexyl acrylate, in a usual manner.

The isocyanate-modified amines are prepared by reacting the amines with the isocyanate compound recited as the polyisocyanate (B-1) in a usual manner.

The Mannich-modified amines are prepared by reacting the amines in a usual manner, an aldehyde, such as formaldehyde, and a phenol compound having at least one site reactive with aldehyde in its aromatic ring, such as phenol, cresol, xylenol, t-butylphenol, or resorcin, in a usual manner.

Examples of the hydrazides include oxalic dihydrazide, malonic dihydrazide, succinic dihydrazide, glutaric dihydrazide, adipic dihydrazide, suberic dihydrazide, azelaic dihydrazide, sebacic dihydrazide, and phthalic dihydrazide.

Examples of the ureas include 3-(p-chlorophenyl)-1,1-dimethylurea, 3-(3,4-dichlorophenyl)-1,1-dimethylurea, 3-phenyl-1,1-dimethylurea, isophorone diisocyanate dimethylurea, and tolylene diisocyanate dimethylurea. Use of these ureas in combination with dicyandiamide usually allows for accelerated cure.

In order to improve storage stability of the composition, a phenol resin may be used in combination with the amine latent curing agent (C). Examples of the phenol resin include compounds having two phenolic hydroxy groups per molecule, such as resorcin, catechol, bisphenol A, bisphenol F, and substituted or unsubstituted biphenol; novolak phenol resins obtained by condensation or co-condensation of at least one phenolic compound selected from the group consisting of phenol compounds (e.g., phenol, cresol, xylenol, resorcin, catechol, bisphenol A, bisphenol F, phenylphenol, and aminophenol) and naphthol compounds (e.g., $\alpha$-naphthol, $\beta$-naphthol, and dihydroxynaphthalene) and an aldehyde compound, such as formaldehyde, acetaldehyde, propionaldehyde, benzaldehyde, and salicylaldehyde, in the presence of an acidic catalyst; aralkyl phenol resins, including phenol aralkyl and naphthol aralkyl resins which are synthesized from the above-recited phenolic compound and dimethoxy-p-xylene, bis(methoxymethyl) biphenyl, and so on; p- and/or m-xylene-modified phenol resins; melamine-modified phenol resins; terpene-modified phenol resins; dicyclopentadiene phenol and naphthol resins synthesized by copolymerization of the above-recited phenolic compounds and dicyclopentadiene; cyclopentadiene-modified phenol resins; polycyclic aromatic ring-modified phenol resins; biphenyl phenol resins; triphenylmethane phenol resins obtained by condensation or co-condensation of the above-recited phenolic compound and an aromatic aldehyde compound (e.g., benzaldehyde or salicylaldehyde) in the presence of an acidic catalyst; and phenol resins obtained by copolymerization of two or more of the above-recited compounds. These phenol resins can be used either individually or in combination thereof.

In the practice of the present invention, it is preferred to use as the amine latent curing agent at least one compound selected from the group consisting of dicyandiamide, epoxy-modified polyamines prepared using imidazoles as a polyamine (i.e., epoxy-modified imidazoles), and ureas in terms of availability, low cost, as well as high adhesion of the resulting curing resin composition. It is more preferred to use dicyandiamide or 3-phenyl-1,1-dimethylurea.

The amount of the amine latent curing agent (C) to be used in the present invention is preferably 1 to 30 parts by mass per 100 parts by mass of the sum of the epoxy resin (A) and the blocked urethane (B). From the standpoint of the balance between viscosity and curing properties of the composition, the amount is more preferably 5 to 15 parts by mass.

The curing resin composition of the present invention may contain a rubber component in addition to components (A) to (C). The use of a rubber component further improves the adhesion and impact resistance of the resin composition. The term "rubber component" for use in the present invention refers to components having a structure obtained by polymerization of a monomer, such as isoprene, butadiene, styrene, acrylonitrile, or chloroprene, including liquid and powdered rubbers.

Examples of the liquid rubbers include polybutadiene, acrylonitrile butadiene rubber (NBR), carboxy-terminated butadiene-acrylonitrile rubber (CTBN), and amino-terminated butadiene-acrylonitrile rubber (ATBN).

Examples of the powdered rubbers include acrylonitrile butadiene rubber (NBR), carboxylic acid-modified NBR, hydrogenated NBR, core-shell rubber, styrene butadiene rubber, and acrylic rubber.

The core-shell rubber is a particulate rubber having a core layer and a shell layer, including those having a two-layer structure composed of a rubbery polymer as an inner core layer and a glassy polymer as an outer shell layer and those having a three-layer structure composed of a glassy polymer as an inner core layer, a rubbery polymer as an intermediate layer, and a glassy polymer as an outer shell layer. The glassy polymer may be, for example, a polymer of methyl methacrylate, a polymer of methyl acrylate, or a polymer of styrene, and the rubbery polymer may be, for example, a butyl acrylate polymer (butyl rubber), silicone rubber, or polybutadiene.

If necessary, the curing resin composition of the present invention may contain additives other than the above-described components. Suitable additives include nonreactive diluents (plasticizers), such as dioctyl phthalate, dibutyl phthalate, benzyl alcohol, and coal tar; fibrous fillers, such as glass fiber, pulp fiber, synthetic fiber, and ceramic fiber; reinforcing materials, such as glass cloth, aramid cloth, and carbon fiber; pigments; silane coupling agents, such as $\gamma$-aminopropyltriethoxysilane, N-$\beta$-(aminoethyl)-$\gamma$-aminopropyltriethoxysilane, N-P-(aminoethyl)-N'-(aminoethyl)-$\gamma$-aminopropyltriethoxysilane, $\gamma$-anilinopropyltriethoxysilane, $\gamma$-glycidoxypropyltriethoxysilane, $\beta$-(3,4-epoxycyclohexyl)ethyltriethoxysilane, vinyltriethoxysilane, N-$\beta$-(N-vinylbenzylaminoethyl)-$\gamma$-aminopropyltriethoxysilane, $\gamma$-methacryloxypropyltrimethoxysilane, $\gamma$-chloropropyltrimethoxysilane, and $\gamma$-mercaptopropyltrimethoxysilane; lubricants, such as candelilla wax, carnauba wax, Japan tallow, Chinese insect wax, bees wax, lanolin, spermaceti, montan wax, petroleum wax, aliphatic waxes, aliphatic esters, aliphatic ethers, aromatic esters, and aromatic ethers; thickeners; thixotropic agents; antioxidants; light stabilizers; ultraviolet absorbers; flame retardants; anti-foaming agents; rust inhibitors; fillers, such as colloidal silica and colloidal alumina; and other commonly used additives. Tacky resins, such as xylene resins and petroleum resins, may also be used in the present invention.

The curing resin composition of the present invention is useful as a structural adhesive in the fields of automotives, rolling stock (including bullet trains and electric trains), civil engineering, construction, marine, aircraft, and aerospace. In addition to the use as a structural adhesive, the composition can be used as an adhesive for general office use, medical use, and electronic materials. Adhesives for electronic materials include interlayer adhesives for multilayer circuit boards such as buildup circuit boards; adhesives for semiconductors, such as die bonding agents and underfills; and adhesives for assembly, such as underfills for BGA reinforcement, anisotropic conductive films (ACF), and anisotropic conductive pastes (ACP).

Examples

The present invention will now be illustrated in greater detail by way of Examples. Unless otherwise specified, all the percentages are given by mass.

The materials used in Preparation Examples, Examples, and Comparative Examples were:

IPDI: isophorone diisocyanate as component (B-1)
HDI: hexamethylene diisocyanate as component (B-1)
PTMG-2000: polytetramethylene glycol (Mn: 2,000; available from Mitsubishi Chemical Corp.) as component (B-2)
G-3000B: glycerol-propylene oxide adduct (Mn: 3,000; from ADEKA Corp.) as component (B-2)
TMP: trimethylolpropane as component (B-2)
G-300: glycerol-propylene oxide adduct (Mn: 300 from ADEKA Corp.) as component (B-2)
G-700: glycerol-propylene oxide adduct (Mn: 700; from ADEKA Corp.) as component (B-2)
PTBP: p-t-butylphenol as component (B-3)
PCP: p-cumylphenol as component (B-3)
PMP: p-methoxyphenol as component (B-3)
EP-4100E: bisphenol A epoxy resin (epoxy equivalent: 190 g/eq., from ADEKA Corp.) as component (A)
EPR-1630: rubber-modified epoxy resin (epoxy equivalent: 900 g/eq., from ADEKA Corp.) as component (A)
EP-49-10P2: chelate-modified epoxy resin (epoxy equivalent: 300 g/eq., from ADEKA Corp.) as component (A)
DICY: dicyandiamide as component (C)
DYHARD UR300: Fenuron (3-phenyl-1,1-dimethylurea) as component (C)
Whiton SB: calcium carbonate (from Shiraishi Calcium Kaisha, Ltd.)
RY-200S: hydrophobic fumed silica (from Nippon Aerosil Co., Ltd.)
DY965: phenol-terminated polyurethane resin (from Huntsman) as component (B')

Preparation Example 1 - Preparation of Blocked Urethane BU-1

In a 1-liter five-neck separable round-bottom flask equipped with a Dimroth condenser, a stirring wing, and a nitrogen line were placed 300.0 g of G3000B (the number of moles of hydroxy group: 0.294 mol) and 63.7 g of IPDI (the number of moles of isocyanate group: 0.572 mol) and allowed to react at 100° to 110°C for 3 hours. After finding out that the %NCO was 3.21%, 45.0 g (0.300 mol) of PTBP was added, and the reaction was continued for another 3 hours at 90° to 100°C. After ascertaining that the absorption by NCO disappeared in the IR absorption spectrum, the reaction was ceased to yield blocked urethane A.

In a 1-liter five-neck separable round-bottom flask equipped with a Dimroth condenser, a stirring wing, and a nitrogen line were placed 311.4 g of PTMG-2000 (the number of moles of hydroxy group: 0.318 mol), 9.83 g of TMP (the number of moles of hydroxy group: 0.220 mol), and 58.8 g of HDI (the number of moles of isocyanate group: 0.699 mol) and reacted at 100° to 110°C for 3 hours. After finding out that the %NCO was 1.78%, 28.7 g (0.191 mol) of PTBP was added, and the reaction was continued for another 3 hours at 90° to 100°C. After ascertaining that the absorption by NCO disappeared in the IR absorption spectrum, blocked urethane A was added thereto, followed by stirring at 80°C for 30 minutes to give blocked urethane BU-1. The weight average molecular weight Mw and the ratio of Mw to the number average molecular weight Mn, Mw/Mn, of blocked urethane BU-1 were determined by the method and conditions below. The results obtained are shown in Table 1.

GPC Instrument: GL7700, from GL Science Inc.
Columns: KF-803 (8.0 mm I.D. $\times$ 30 cm) plus KF-804 (8.0 mm I.D. $\times$ 30 cm).
Detector: Differential refractometer RI7754A
Column temperature: 40°C
Eluent: THF
Flow rate: 1.0 mL/min
Injection volume: 10 $\mu$L (1% solution in THF)
Standard polymers: A calibration curve was prepared using the following set of polystyrene standards available from Tosoh Corp.
TSK Standard Polystyrene A-500
TSK Standard Polystyrene A-1000
TSK Standard Polystyrene A-2500
TSK Standard Polystyrene A-5000
TSK Standard Polystyrene F-1

TSK Standard Polystyrene F-2
TSK Standard Polystyrene F-4
TSK Standard Polystyrene F-10
TSK Standard Polystyrene F-20
TSK Standard Polystyrene F-40

Preparation Example 2 - Preparation of Blocked Urethane BU-2

In a 1-liter five-neck separable round-bottom flask equipped with a Dimroth condenser, a stirring wing, and a nitrogen line were placed 300.0 g of G3000B (the number of moles of hydroxy group: 0.294 mol) and 50.0 g of HDI (the number of moles of isocyanate group: 0.595 mol) and allowed to react at 100° to 110°C for 3 hours. After finding out that the %NCO was 3.61%, 69.0 g (0.325 mol) of PCP was added, and the reaction was continued for another 3 hours at 90° to 100°C. After ascertaining that the absorption by NCO disappeared in the IR absorption spectrum, the reaction was ended to yield blocked urethane B.

In a 1-liter five-neck separable round-bottom flask equipped with a Dimroth condenser, a stirring wing, and a nitrogen line were placed 94.3 g of PTMG-2000 (the number of moles of hydroxy group: 0.096 mol), 9.4 g of G-700 (the number of moles of hydroxy group: 0.037 mol), and 21.5 g of IPDI (the number of moles of isocyanate group: 0.193 mol) and reacted at 100° to 110°C for 3 hours. After finding out that the %NCO was 2.00%, 14.5 g (0.068 mol) of PCP was added, and the reaction was continued for another 3 hours at 90° to 100°C. After ascertaining that the absorption by NCO disappeared in the IR absorption spectrum, blocked urethane B was added, followed by stirring at 80°C for 30 minutes to furnish blocked urethane BU-2. The weight average molecular weight Mw and the ratio of Mw to the number average molecular weight Mn, Mw/Mn, of blocked urethane BU-2 were determined by the same method as described in Example 1. The results obtained are shown in Table 1.

Preparation Example 3 - Preparation of Blocked Urethane BU-3

In a 1-liter five-neck separable round-bottom flask equipped with a Dimroth condenser, a stirring wing, and a nitrogen line were put 300.0 g of PTMG-2000 (the number of moles of hydroxy group: 0.306 mol), 13.1 g of G-300 (the number of moles of hydroxy group: 0.119 mol), and 68.5 g of IPDI (the number of moles of isocyanate group: 0.615 mol) and reacted at 100° to 110°C for 3 hours. After finding out that the %NCO was 2.08%, 27.0 g (0.217 mol) of PMP was added, and the reaction was continued for another 3 hours at 90° to 100°C. After ascertaining that the absorption by NCO disappeared in the IR absorption spectrum, the reaction was ceased to give blocked urethane BU-3. The weight average molecular weight Mw and the ratio of Mw to the number average molecular weight Mn, Mw/Mn, of blocked urethane BU-3 were determined by the same method as described in Example 1. The results obtained are shown in Table 1.

Preparation Example 4 - Preparation of Blocked Urethane BU-4

In a 1-liter five-neck separable round-bottom flask equipped with a Dimroth condenser, a stirring wing, and a nitrogen line were placed 300.0 g of G-3000B (the number of moles of hydroxy group: 0.294 mol) and 63.7 g of IPDI (the number of moles of isocyanate group: 0.572 mol) and reacted at 100° to 110°C for 3 hours. After finding out that the %NCO was 3.21%, 37.5 g (0.302 mol) of PMP was added, and the reaction was continued for another 3 hours at 90° to 100°C. After observing that the absorption by NCO disappeared in the IR absorption spectrum, the reaction was ceased to give blocked urethane BU-4. The weight average molecular weight Mw and the ratio of Mw to the number average molecular weight Mn, Mw/Mn, of blocked urethane BU-3 were determined by the same method as described in Example 1. The results obtained are shown in Table 1.

Blocked urethanes BU-3 and BU-4 obtained in Preparation Examples 3 and 4, respectively, are comparative samples of blocked urethane outside the scope of the blocked urethan (B) used in the present invention. The comparative blocked urethanes are designated blocked urethan (B').

Example 1

In a 500 mL disposable cup were placed 65 g of EP-4100E, 5 g of EP-49-10P2, 10 g of EPR-1630, 20 g of blocked urethane BU-1, 7 g of DICY, 25 g of Whiton SB, 1 g of DYHARD UR300, and 1 g of RY-200S. The mixture was stirred with a spatula at 25°C for 5 minutes and further stirred on a planetary stirrer to prepare a curing resin composition. The resulting composition was evaluated by the wedge peel impact test, overbake test, and cataplasma test (water resistance test) in accordance with the methods below. The results are shown in Table 1.

Wedge peel impact test:

Iron was used as adherends. A test specimen was prepared by curing the curing resin composition at 180°C for 30 minutes. The impact strength of the specimen at -40°C was determined in accordance ISO 11343.

Overbake test:

Iron was used as adherends. A test specimen was prepared by curing the curing resin composition at 180°C for 30 minutes. The T-peel strength of the specimen at 23°C was determined according to JIS K6854-3. The T-peel strength thus determined was taken as a standard T-peel strength. Another specimen was prepared and tested for T-peel strength in the same manner as above, except that the curing resin composition was cured at 220°C for 30 minutes. The T-peel strength thus determined was taken as a T-peel strength at 220°C cure. The strength retention after overbake (220°C) was calculated by comparison with the standard T-peel strength according to the formula:

$$\text{Strength retention } (\%) = (\text{T-peel strength at } 220°C \text{ cure/standard T-peel strength}) \times 100$$

Cataplasma test (water resistance test):

Iron was used as adherends. A test specimen was prepared by curing the curing resin composition at 180°C for 30 minutes. The specimen was wrapped in absorbent cotton impregnated with ion-exchanged water and further wrapped with polyethylene film. The wrapped specimen was kept at 70°C for 168 hours. The specimen removed from the wrap was dried at 23°C for 24 hours and tested for T-peel strength at 23°C according to JIS K 6854-3. The T-peel strength thus determined was taken as a T-peel strength after cataplasma test, and the strength retention after the cataplasma test was obtained according to the formula:

Strength retention (%) = (T-peel strength after cataplasma test/standard T-peel strength) $\times$ 100

Example 2 and Comparative Examples 1 to 3

A curing resin composition was prepared and evaluated in the same manner as in Example 1, except for changing the blocked urethan as shown in Table 1. The results obtained are shown in Table 1. The Mw and Mw/Mn of DY965 used in Comparative Example 3 were determined in the same manner as for the other blocked urethanes.

Table 1

| | | | Example | | Comparative Example | | |
|---|---|---|---|---|---|---|---|
| | | | 1 | 2 | 1 | 2 | 3 |
| Curing Resin Composition (g) | Component (A) | EP-4100E | 65 | 65 | 65 | 65 | 65 |
| | | EP-49-10P2 | 5 | 5 | 5 | 5 | 5 |
| | | EPR-1630 | 10 | 10 | 10 | 10 | 10 |
| | Component (B) | BU-1 | 20 | | | | |
| | | BU-2 | | 20 | | | |
| | Component (B') | BU-3 | | | 20 | | |
| | | BU-4 | | | | 20 | |
| | | DY965 | | | | | 20 |
| | Component (C) | DICY | 7 | 7 | 7 | 7 | 7 |
| | | DYHARD UR300 | 1 | 1 | 1 | 1 | 1 |
| | Others | Whiton SB | 25 | 25 | 25 | 25 | 25 |
| | | RY-200S | 1 | 1 | 1 | 1 | 1 |
| Mw of Blocked Urethane | | | 28296 | 21906 | 39182 | 15610 | 34754 |

(continued)

| | | Example | | Comparative Example | | |
|---|---|---|---|---|---|---|
| | | 1 | 2 | 1 | 2 | 3 |
| Mw/Mn of Blocked Urethane | | 2.19 | 1.92 | 2.57 | 1.54 | 1.84 |
| Evaluation | Impact Strength at -40°C (N/mm) | 26.90 | 26.70 | 25.80 | 1.10 | 13.50 |
| | Standard T-peel Strength (N/mm) | 12.45 | 13.14 | 9.94 | 12.64 | 11.24 |
| | T-Peel Strength after Overbake (N/mm) | 8.17 | 12.84 | 3.54 | 12.18 | 4.75 |
| | Strength Retention after Overbake (%) | 65.60 | 97.70 | 35.60 | 96.40 | 42.30 |
| | T-peel Strength after Cataplasma Test (N/mm) | 9.76 | 9.96 | 5.90 | 9.99 | 6.21 |
| | Strength Retention after Cataplasma Test (%) | 78.70 | 76.10 | 59.40 | 79.00 | 55.20 |

As can be seen from the results in Table 1, the curing resin compositions of the present invention exhibit satisfactory results in all the impact strength at -40°C, strength retention after overbake, and strength retention after cataplasma test. On the other hand, those outside the scope of the present invention show poor results in one or more of the test items.

## Claims

1. A curing resin composition comprising (A) an epoxy resin, (B) a blocked urethane, and (C) an amine latent curing agent, wherein

   the blocked urethane (B) has Mw of 15,000 to 38,000, and Mw/Mn of 1.9 to 3.0
   wherein Mw represents a weight average molecular weight of the blocked urethane (B), and Mn represents a number average molecular weight of the blocked urethane (B).

2. The curing resin composition according to claim 1, wherein the epoxy resin (A) is a bisphenol epoxy resin.

3. The curing resin composition according to claim 1, wherein the blocked urethane (B) comprises

   a blocked urethane having an oxybutylene group, and
   a blocked urethane having an oxypropylene group.

4. The curing resin composition according to claim 1, wherein the blocked urethane (B) is an isocyanate-terminated urethane prepolymer prepared from (B-1) a polyisocyanate and (B-2) a polyol, the isocyanate terminals being blocked with (B-3) a blocking agent.

5. A structural adhesive comprising the curing resin composition according to any one of claims 1 to 4.

## INTERNATIONAL SEARCH REPORT

International application No.

**PCT/JP2023/013920**

### A. CLASSIFICATION OF SUBJECT MATTER

*C08G 18/58*(2006.01)i; *C08G 18/80*(2006.01)i; *C09J 175/00*(2006.01)i
FI:   C08G18/58; C08G18/80; C09J175/00

According to International Patent Classification (IPC) or to both national classification and IPC

### B. FIELDS SEARCHED

Minimum documentation searched (classification system followed by classification symbols)

C08G18/58; C08G18/80; C09J175/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2020/218552 A1 (KANEKA CORPORATION) 29 October 2020 (2020-10-29) claims 1, 3, 5, 10, paragraphs [0030], [0177]-[0188], [0249], [0324]-[0358], examples | 1-5 |
| X | WO 2016/159223 A1 (KANEKA CORPORATION) 06 October 2016 (2016-10-06) claims 1, 11-14, 16-17, paragraphs [0027]-[0030], [0083]-[0087], [0123]-[0148], examples | 1-5 |
| A | JP 2020-132833 A (KANEKA CORPORATION) 31 August 2020 (2020-08-31) claim 1, paragraph [0191], C-8 | 1-5 |
| A | JP 2021-008581 A (SUNSTAR ENGINEERING INC) 28 January 2021 (2021-01-28) claim 1, paragraph [0099] | 1-5 |
| A | JP 2001-064344 A (YOKOHAMA RUBBER CO LTD) 13 March 2001 (2001-03-13) claim 1, paragraph [0054] | 1-5 |
| A | JP 2007-023238 A (YOKOHAMA RUBBER CO LTD) 01 February 2007 (2007-02-01) claim 1, paragraphs [0087]-[0088] | 1-5 |
| A | JP 2001-048948 A (YOKOHAMA RUBBER CO LTD) 20 February 2001 (2001-02-20) claim 1, paragraphs [0055]-[0056] | 1-5 |

☐ Further documents are listed in the continuation of Box C.      ☑ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **16 June 2023** | **27 June 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

Form PCT/ISA/210 (patent family annex) (January 2015)

**INTERNATIONAL SEARCH REPORT**
**Information on patent family members**

International application No.

**PCT/JP2023/013920**

| Patent document cited in search report | | | Publication date (day/month/year) | Patent family member(s) | Publication date (day/month/year) |
|---|---|---|---|---|---|
| WO | 2020/218552 | A1 | 29 October 2020 | (Family: none) | |
| WO | 2016/159223 | A1 | 06 October 2016 | (Family: none) | |
| JP | 2020-132833 | A | 31 August 2020 | (Family: none) | |
| JP | 2021-008581 | A | 28 January 2021 | US 2023/0013387 A1 claim 1, paragraphs [0186]-[0187] EP 3995523 A1 CN 113993927 A | |
| JP | 2001-064344 | A | 13 March 2001 | (Family: none) | |
| JP | 2007-023238 | A | 01 February 2007 | (Family: none) | |
| JP | 2001-048948 | A | 20 February 2001 | (Family: none) | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5155973 A
- US 20210380749 A1

- JP 2016210922 A